# EUROPEAN PATENT APPLICATION

(11) **EP 1 686 478 A2**
(43) Date of publication of application: **02.08.2006**
(21) Application number: 06100431.3
(22) Date of filing: 17.01.2006
(51) Int. Cl.: G06F 11/20

(54) **Storage replication system with data tracking**

(30) Priority: 28.01.2005 US 46350
(71) Applicant: Hewlett-Packard Development Company, L.P., Houston, TX 77070 (US)
(72) Inventor: Dohm, Karl, 809192398, Colorado Springs (US)
(74) Representative: Durville, Guillaume

(57) **Abstract**

A storage replication method comprises replicating data from a source among a plurality of destinations and tracking data modifications in the destinations.
Identification of the modifications is mutually communicated among multiple destination arrays **102D1, 102D2, 102D3.** In a source failover event, a selected destination is established as a new source, reforming the replicated data in the remaining destinations into synchrony with the new source.

## Description

### BACKGROUND

Maintenance of multiple copies of data is part of the security function in data processing operations in case data is unavailable, damaged, or lost. Institutional users of data processing systems commonly maintain quantities of highly important information and expend large amounts of time and money to protect data against unavailability resulting from disaster or catastrophe. One class of techniques for maintaining redundant data copies is termed mirroring, in which data processing system users maintain copies of valuable information on-site on a removable storage media or in a secondary mirrored storage site positioned locally or remotely. Remote mirroring off-site but within a metropolitan distance, for example up to about 200 kilometers, protects against local disasters including fire, power outages, or theft. Remote mirroring over geographic distances of hundreds of kilometers is useful for protecting against catastrophes such as earthquakes, tornados, hurricanes, floods, and the like. Many data processing systems employ multiple levels of redundancy to protect data, positioned at multiple geographic distances.

One aspect of multiple-site data replication and mirroring technology is the response to failure and disaster conditions at one of the sites. Typically, some data renormalization or reconciliation may be needed to bring the various surviving sites or nodes into synchrony, a process that typically involves full copying of the logical units (luns) to be renormalized in the surviving nodes. Copying results in performance and availability degradation that is unacceptable to enterprise class high-availability and disaster-tolerant applications.

### SUMMARY

According to an embodiment of a technique for reforming a fanout relationship, a storage replication method comprises replicating data from a source among a plurality of destinations and tracking data modifications in the destinations. Identification of the modifications is mutually communicated among multiple destination arrays. In a source failover event, a selected destination is established as a new source, reforming the replicated data in the remaining destinations into synchrony with the new source.

### BRIEF DESCRIPTION OF THE DRAWINGS

Embodiments of the invention relating to both structure and method of operation, may best be understood by referring to the following description and accompanying drawings:
**FIGUREs 1A, 1B,** and **1C** are schematic block diagrams illustrating an embodiment of a storage system with a plurality of storage arrays arranged in a 1:n fanout configuration and adapted to mend to a 1:n-1 fanout with low overhead;
**FIGURE 2** is a schematic block diagram showing an embodiment of a storage unit adapted for usage in a redundant data storage system;
**FIGURE 3** is a schematic flow chart depicting an embodiment of a technique adapted to quickly reform the fanout relationship so that data is replicated to multiple geographic locations while maintaining the data without risk;
**FIGURE 4** is a schematic diagram showing a sequence of block maps in an example of data tracking in a storage system;
**FIGURE 5** shows schematic table diagrams illustrating an embodiment of data structures suitable for usage to collect data during replication tracking;
**FIGUREs 6A** and **6B** are flow charts depicting embodiments of techniques for mending fanout to a reduced fanout ratio in the event of a source failure;
**FIGUREs 7A** and **7B** are flow charts showing embodiments of techniques for reforming a fanout configuration upon occurrence of a source failure; and
**FIGUREs 8A** and **8B** are schematic block diagrams illustrating a storage system arrangement that does not include tracking and sharing of tracked information.

### DETAILED DESCRIPTION

A storage system, storage unit, and associated operating technique are described for reconstructing multiple-site replication for 1:n fanout which avoids nearly all renormalization overhead in most failure scenarios.

Reformation of the fanout using the techniques and structures disclosed herein may reduce or minimize inter-site traffic, resynchronization time, and performance impacts to host applications. The techniques and structures further can reduce or minimize the time window during which a source logical unit (lun) does not have access to at least one corresponding synchronized copy after a failure event.

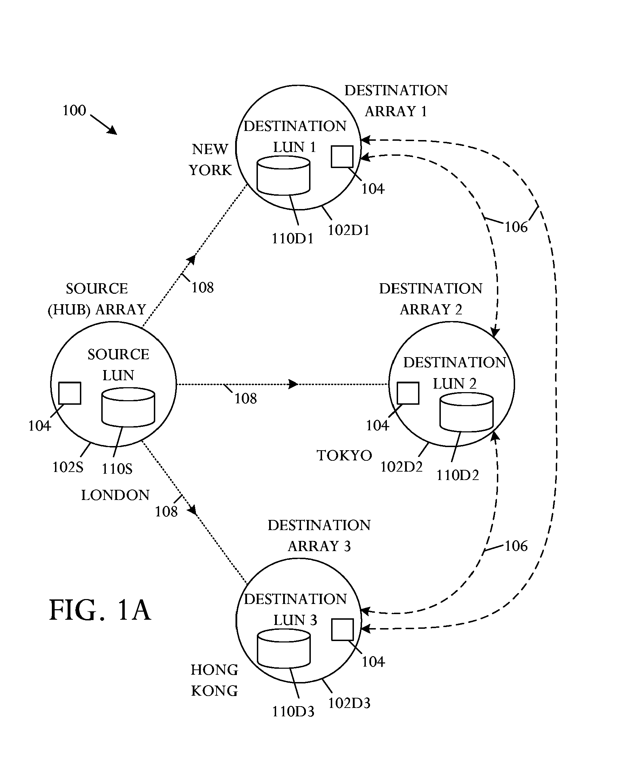

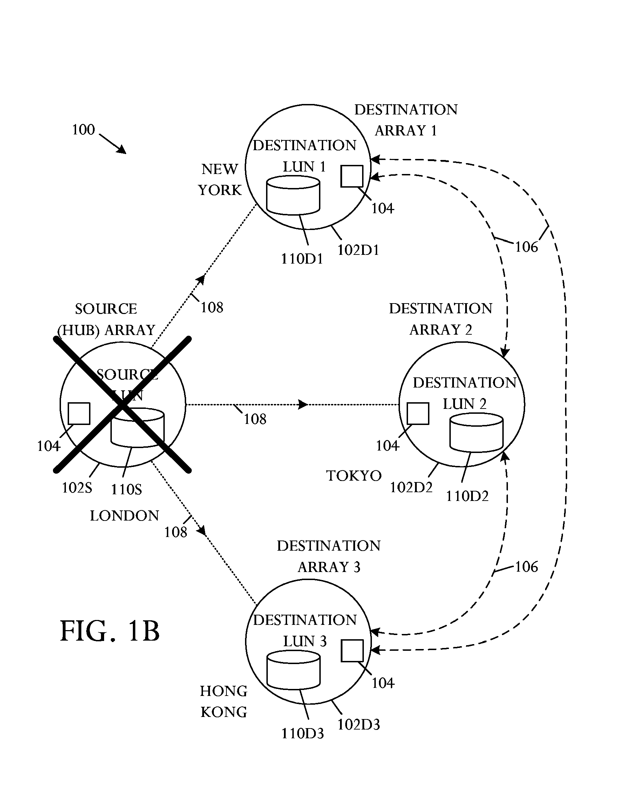

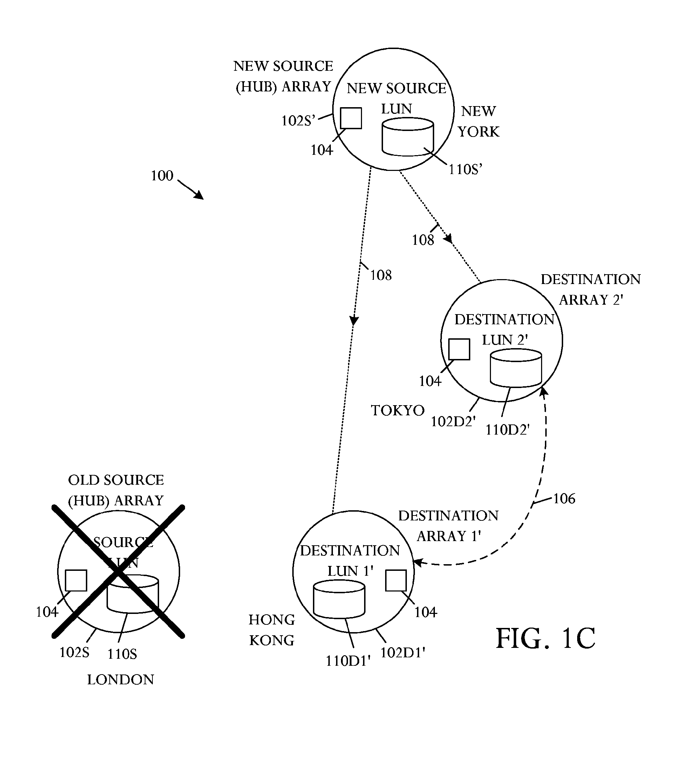

Referring to **FIGUREs 1A, 1B,** and **1C,** schematic block diagrams illustrate an embodiment of a storage system 100 that comprises a plurality of storage arrays 102S, **102D1, 102D2,** and **102D3** arranged in a 1:n fanout configuration, illustratively a 1:3 fanout configuration. **FIGURE 1A** shows a 1:3 logical unit (lun) fanout example with a source array **102S,** which may be termed a hub, and three destination arrays **102D1, 102D2,** and **102D3. FIGURE 1B** shows the 1:3 lun fanout example upon failure of the source array **102S. FIGURE 1C** illustrates a structure of the storage system **100** after the source failure and after mending of the fanout to a 1:2 configuration. A logic 104 is distributed through and executable in the multiple storage arrays **102S, 102D1, 102D2,** and **102D3**. In some configurations, the logic may extend outside the storage arrays to hosts, computers, controllers, storage management devices, and the like. The logic **104** is adapted to track data modifications during data replication from the source storage array **102S** to n destination storage arrays **102D1, 102D2,** and **102D3.** The logic **104** mutually shares tracked data modification information among the n destination storage arrays via pathways 106 where n is any suitable number. The logic 104 responds to a failover condition by reforming to a 1:n-1 fanout configuration. The reformation is directed based on the mutually shared tracked data modification information from the n destination storage arrays **102D1, 102D2,** and **102D3.**

Simple remote replication deployments may be two-site, also called a 1:1 configuration, in which input/output operations to one logical unit (lun) are replicated in real time to a destination lun, typically on a destination array in a separate geographical location. If an event, for example a disaster condition such as weather, earthquake, power outage, or destruction situation, affects a primary site, an application can recover to the condition immediately prior to the event by moving operations to the secondary site. A limitation of 1:1 remote replication arrangements is that following a site event, only a single copy of the replicated data remains until the damaged site is recovered. The recovery time may be substantial, representing an unacceptable single point of failure risk to demanding disaster tolerant and high availability applications in industries and institutions such as banking, brokerages, stock exchanges, military, healthcare, and the like. Many disaster tolerant and high availability users impose a specification for three-site replication which results in two active sites if one site is removed by an event.

Logical unit (lun) fanout is an array-based remote application technology which involves replicating a mirror copy of a source lun into two or more destination arrays simultaneously. New writes to the source are replicated to the multiple destinations in either an asynchronous or synchronous manner. In synchronous replication, a write operation to the source lun is acknowledged to the initiating host as completed when the write is committed to both the source lun and destination lun. In asynchronous replication, a write operation to the source lun is acknowledged to the initiating host as completed when the write is committed to the source lun but not the destination lun. The write is applied to the destination lun at a later time in an action independent from the write to the source lun. Asynchronous replication enables the highest level of performance for geographically distributed remote replication because the wire latency delay is not incurred on a write operation to the source lun. Synchronous replication, while having lower performance over distance, ensures that the destination lun is a byte-wise exact or very close to exact replica of the source lun at all times.

Multiple site remote replication may be implemented using single lun fanout, simple 1:2 fanout technology, or, as in the illustrative storage system **100,** 1:3 fanout.

A higher ratio of lun fanout increases redundancy and thus reliability. Lun fanout also enables accessibility of data to users. For example, a broadcast-distributed data distribution model may involve 1:n fanout with n being two or larger, possibly much larger. In a particular example, a live streaming media feed may be applied to a server that is close to client applications, thereby eliminating significant network overhead.

The storage system **100** may be visualized with the source storage array **102S** or hub at a particular location, for example a geographical location such as London. Out from the hub **102S** extend communication links **108** which connect the hub **102S** to remote storage arrays **102D1, 102D2,** and **102D3.** The hub **102S** can be an array containing a source logical unit (lun) **110S.** The remote storage arrays **102D1, 102D2,** and **102D3** contain remote luns **110D1, 110D2,** and **110D3.** Data flows either synchronously or asynchronously on the communication links **108.** In a typical case, the storage arrays are geographically distributed. For example purposes only, a first destination array **102D1** and first destination lun **110D1** may be located in New York, a second destination array **102D2** and second destination lun **110D2** may be located in Tokyo, and a third destination array **102D3** and third destination lun **110D3** may be located in Hong Kong. Wide distribution facilitates avoidance of failures that may occur in a limited geographical region. In a typical configuration, one or more links are highly remote and asynchronous and one link is within or across a metropolitan area and synchronous, enabling a source lun to be fairly responsive while maintaining suitable disaster tolerance. Other configurations are also possible.

**FIGURE 1B** illustrates a matter relating to 1:n fanout operation - how to address fanout relationship destruction resulting from loss of the source **102S** and reformation of the fanout relationship to re-establish fanout replication with the remaining storage arrays **102D1, 102D2,** and **102D3.**

When a condition occurs in which the source storage array **102S** or hub is lost, or communications to the hub are lost, applications may continue if the storage system environment **100** is capable of failing over operations to one of the destination storage arrays **102D1, 102D2,** and **102D3**.

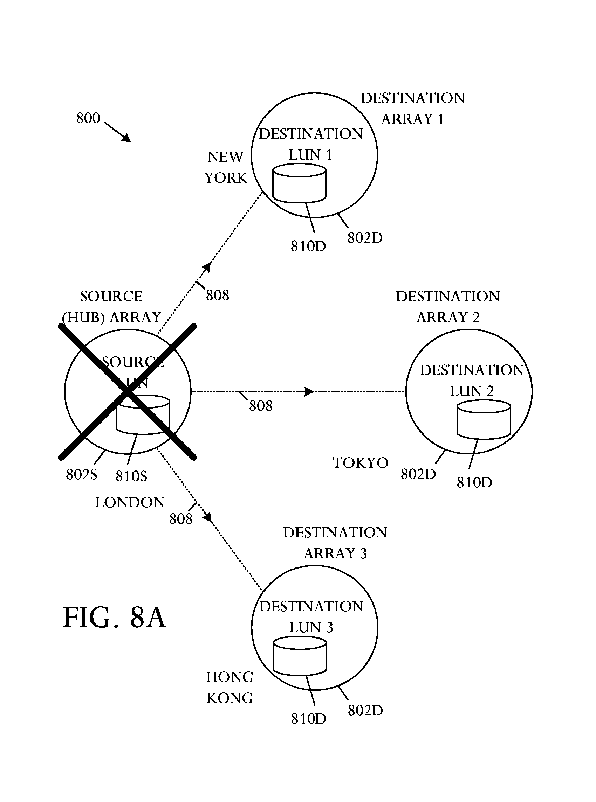

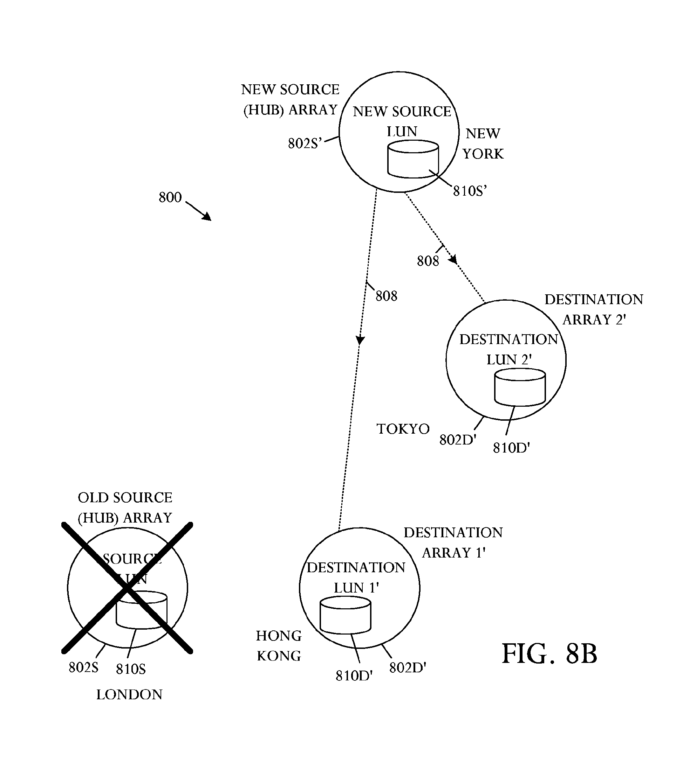

In a fanout arrangement **800** that does not include tracking and sharing of tracked information, no association exists between destination arrays as shown in **FIGURE 8A.** Each destination array **802D** only has a relationship with the hub **802S**. When the fanout relationship is to reform due to loss of the hub **802S,** as shown in **FIGURE 8B,** the destination arrays **802D** have no information relating to which blocks have or have not been written to the corresponding lun **810D** on the other destination arrays **802D.** As a result, the destination array which is determined to operate as the new hub must fully copy the lun, an operation that may last a substantial time, perhaps days, and the performance penalty incurred by the full copy operations can be significant. Once the formation of the fanout is initiated, a customer is exposed to a circumstance in which only a single good copy of the data is protected, regardless of the beginning degree of fanout.

**FIGURES 8A** and **8B** are described in more detail hereinafter.

Referring again to the storage system **100** depicted in **FIGURE 1A,** data protection and efficiency is enhanced by maintaining an ongoing association among information in the destination storage arrays **102D1, 102D2,** and **102D3.** The association is maintained through operation of a technique, which may be termed an accounting technique, enabling each destination array to maintain identity and tracking of blocks in the local lun **110S** that differ with respect to the partnered lun **110D1, 110D2,** and **110D3** on any of the other destination storage arrays **102D1, 102D2,** and **102D3.**

Typically, the individual destination storage arrays **102D1, 102D2,** and **102D3** include a logic configured to track modifications in data blocks in the respective destination logical unit (lun) **110D1, 110D2,** and **110D3.** In the tracking operation, the logic may detect a write directed to a logical unit (lun) to which a fanout relationship exists with the source storage array 102 and respond to the write operation by sending a communication packet to each of the other destination storage arrays **102D1, 102D2,** and **102D3.** In the illustrative embodiment, the communication packets are interchanged among the destination storage arrays **102D1, 102D2,** and **102D3** on mutual remote communication links **106.** In some embodiments, the destination storage arrays **102D1**, **102D2,** and **102D3** communicate by asynchronous communication, whereby a request is made on the network without waiting for a reply for communication to proceed. The reply may come at a later time.

In an illustrative embodiment, the logic collects data packets including block numbers modified by one or more writes and sequence numbers supplied by the source array **102S** and indicating a write to the source **102S.**

In the source array **102S,** for the logical unit (lun) undergoing fan-out such as **110S,** the block writes are handled by assigning a sequence number. Each write is typically identified by one sequence number. The source array 102S sends information including a block identifier (ID), data in the block, and sequence number on the communication links **108** to all destination storage arrays **102D1, 102D2,** and **102D3.**

The block can be a physical entity or a logical entity. For example, the block may be a track/sector, which usually relates to a physical storage element or disk. A typical logical entity is a sequential block number in a lun. Generally, a block is a chunk of data of a fixed, known size at a defined offset in a storage element. Different types of storage arrays may replicate data using different types of blocks. For example, some arrays use physical blocks specified as track/sector items, and other arrays use logical blocks.

For illustrative purposes and an example of a logical block description, a lun may include 1000 blocks, each having a size of 1 MegaByte (MB). The meaning of block 562 in this context is the 562th 1MB block in the lun.

The sequence number is assigned by the source array. The sequence number is an integer which continually increments in sequence for a particular logical unit (lun). A write to a first logical unit, for example lun A, on the source array does not impact the sequence number for a second logical unit such as lunB on the same source array. Accordingly, the sequence number increments by one for arrival of each write operation for the source lun. Read operations leave the sequence number unchanged.

The packets can be bundled into groups of packets and communicated among the destination storage arrays **102D1, 102D2,** and **102D3** in the packet groups to facilitate efficiency. The destination storage arrays **102D1, 102D2,** and **102D3** further include logic adapted to mutually receive the data packets and/or data packet groups from the other destination storage arrays **102D1, 102D2,** and **102D3** and determine differences in data content based upon the packet information. The remote communication links **106** between the destination storage arrays **102D1, 102D2,** and **102D3** enable each destination storage array to have information relating to differences in lun content among all destination arrays at substantially all times subject to effects of transmission delay between the arrays. The remote communication links **106** may be direct connections among the destination storage arrays **102D1, 102D2,** and **102D3.** In some implementations the remote links **106** may be independent from interconnection pathways to the source storage array **102S.** In some cases, the communication links **106** may be in the same network and thus not independent, although if a portion of a link **106** near the source fails, operations continue so long as subsections of the link **106** between the destination storage arrays remain operational, for example in the manner the public internet operates. The remote communication links **106** may be formed by a suitable interconnect technology. An example is Internet Protocol (IP) communication.

When a hub array is lost, for example as shown in **FIGURE 1B,** and the fanout is to be mended as depicted in **FIGURE 1C,** any of the destination storage arrays **102D1, 102D2,** and **102D3** may be selected to operate as the new central hub **102S'.** The newly designated source array or hub **102S'** receives a command to failover operations from a control entity, for example a system management entity. Logic in the storage system **100** can be adapted to respond to the failover condition by configuring the multiple storage arrays to exclude the failed source storage array **102S** and assign one of the n destination storage arrays **102D1, 102D2,** and **102D3** to operate as a new source storage array **102S'** in an assignment made substantially contemporaneously with the failover. For example, the determination of a new source may be made on the basis of various conditions or circumstances such as type or nature of the provoking event, time of day, availability of technical support, technical characteristics of the various sites, various business practices, and the like. For example, a source may be selected on the basis that the event occurs during working hours in one location and in the middle of the night in another location.

Once the new source storage array **102S'** is selected, the storage system **100** can further respond to the failover condition by reforming data in remaining n-1 destination storage arrays into synchrony or compliance with the new source storage array **102S'.** To reform the remainder of the storage system **100,** a command or signal can be sent from the new source storage array **102S'** informing the remaining destination storage arrays that fanout is reforming. Upon receipt of the reform command, the destination storage arrays **102D1'** and **102D2'** in the new configuration no longer accept new requests from the previous source storage array **102S**. Every write arriving prior to the reform command is completed, regardless of whether acknowledgement can be sent back to the original source **102S.** The destination storage arrays **102D1'** and **102D2'** also respond to the new source storage array **102S'** by sending a final list designating blocks on the destination lun **110D1'** or **110D2'** which have received an update.

The new source storage array **102S'** resolves the system data state by determining differences in updated block lists received from the remaining destination storage arrays **102D1'** and **102D2'** and copies data back to the destination storage arrays **102D1'** and **102D2'** that is sufficient to synchronize the storage arrays. The new source array **102S'** copies only blocks that differ via the communication links **108** to the reforming destination storage arrays **102D1'** and **102D2'.** During a resolution phase, the new source storage array **102S'** sends only those data blocks that are deficient in the destination arrays in comparison to the source, bringing the destinations into synchrony with the new source.

In a typical case of a successful reform command, the new source storage array **102S'** requests and receives information regarding which blocks are to be copied to each of the destination arrays to enable the destination luns **110D1'** and **110D2'** to be brought into synchrony with the new source storage array **102S'.** The new source storage array **102S'** copies only blocks which differ to each destination lun **110D1'** or **110D2'** and the fanout reforms.

In the unusual case that a reform command cannot execute and a destination array cannot be accessed, the inaccessible destination array does not participate in the fanout reformation. If, after the fanout is mended, any writes from a host application are sent to the new source lun **110S',** then a block copy, using an embodiment of the described technique, is used to mend the inaccessible destination array back into the fanout when the destination array returns online. Using the illustrative technique, the fanout can be resynchronized with maximum efficiency, copying only those blocks which differ, for the condition that a lun originally synchronized in the fanout relationship rejoins the fan following a time period of inaccessibility. A full copy of all lun blocks is only warranted in the case when a completely new lun joins the fan. The technique also covers the case of the original source rejoining the 1:n-1 fan to reform a 1:n fanout. The technique further covers the case of a new source lun that sees write operations while one or more destination luns in the fan are inaccessible. In all cases, the technique includes the action of copying only blocks which differ.

The original source **102S** may also maintain a block/sequence table for the writes applied to the luns. The described basic block difference accounting and updating are suitable for the write operations. Once the reformed links are operational or the original source **102S** rejoins the fan - after reformation as a destination - the response to the reform commands, once received, may include a block/sequence number list that may be relatively large, depending on duration of the communication loss.

In a typical embodiment, the new source is selected without regard for completeness of lun replication. The selected new source may not have as up-to-date replication as one or more of the destination arrays. In the typical embodiment, no efforts are made to attain a more complete new source. However, in some embodiments the most current information may be sought. Such embodiments may include a logic executable in the new source storage array **102S'** that is adapted to determine whether a destination storage array **102D1'** or **102D2'** has a more current state than the new source storage array **102S'.** The destination storage array **102D1'** or **102D2'** with the more current state is determined after issuing the reform command and gathering responses. The destination storage array **102D1'** or **102D2'** with the highest block sequence number across all blocks for the lun is the most current. If communication is broken to any destination, that destination cannot participate in the negotiation. The new source storage array **102S'** sends to the destination storage array having the most current state a request for data that is contained in the destination array but not present in the new source storage array **102S'.** The blocks requested from the destination are any having a higher sequence number. The new source storage array **102S'** gathers the newer blocks for the lun from the selected destination array and updates the new source storage array **102S'** with the data received in response to the request.

The new source array gathers the newer blocks (for the Lun) from the chosen destination array

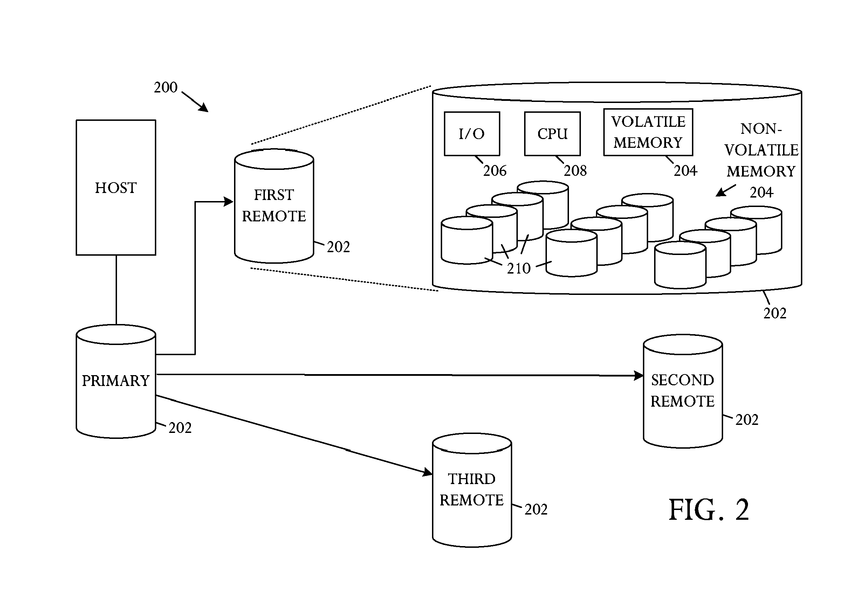

Referring to **FIGURE** 2, a schematic block diagram illustrates an embodiment of a storage unit **202** that is adapted for usage in a redundant data storage system **200.** A data storage system **200** may have few or many storage units **202.** The storage unit **202** comprises a storage **204,** an input/output (I/O) interface **206** adapted to communicate with a plurality of distributed site storage units, and a controller **208.** A logic is executable on the controller **208** that is adapted to operate the storage unit **202** as a secondary site in a fanout arrangement and replicate data to the storage **204** from a primary site storage unit. The logic further tracks modifications in data written to storage **204** and communicates the tracked modifications among the plurality of distributed site storage units. The logic also collects tracked changes received from the plurality of distributed site storage units.

The storage **204** may be any suitable storage medium device such as a disk array, optical disk storage apparatus, a layered memory, and/or a distributed but cohesively-controlled network with storage capabilities. The storage **204** is configured at least partly as logical units (luns) **210.**

During operation of the storage unit **202** as a secondary site storage unit, the logic executable on the controller **208** detects writes directed to a logical unit (lun) to which a fanout relationship exists with the primary site storage unit. The logic tracks blocks in a logical unit (lun) that are written by the write operation. In a particular embodiment, the tracking action may include collection of block numbers that are modified by writes to the storage unit **202** and sequence numbers sent from a host or source indicating unique identifiers for block content. The collected blocks and sequence numbers may be stored in data packets or accumulated over a selected time and formed into packet groups, which may be called "chunks", and communicates directly among other distributed secondary site storage units, for example by asynchronous communication, to share the tracked information. The logic receives block and sequence number data in packets and/or groups from other secondary storage units and analyzes the information with respect to information local to the storage unit **202** to determine differences in data content among the multiple secondary storage units, typically at distributed sites.

The storage unit **202** may receive a command to failover. In response to the command, the logic executable on the controller **208** operates the storage unit **202** as a primary site and sends a request to reform fanout distributed site storage units networked to the storage unit **202.** The distributed site storage units respond to the request to reform by sending updated block lists indicating writes replicated at the remote units. The storage unit **202** determines which data is to be sent to the distributed site storage units based on updated block lists, copies the data to the distributed site units. The copied data is sufficient to create an exact byte-for-byte replica of the data (lun) from the primary site.

If, after failover, the storage unit **202** is not selected to operate as the primary, logic operative on the controller **208** receives, typically as a first indication of failover, a signal or command from the new primary initiating data reformation. In response to the signal to reform, logic immediately stops accepting new requests from the previous primary and sends to the new primary an updated block list containing a list of the last blocks updated by the original replication stream.

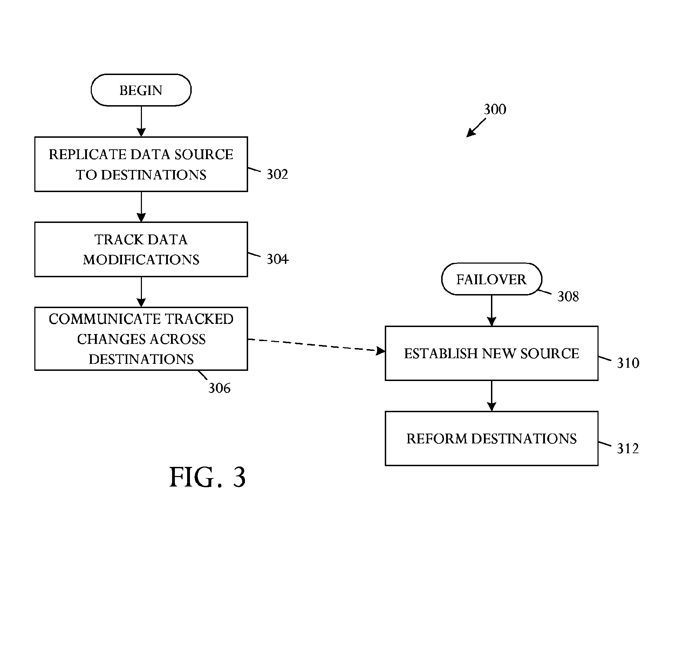

Referring to **FIGURE 3,** a schematic flow chart depicts an embodiment of a technique adapted to quickly reform the fanout relationship so that data is replicated to multiple geographic locations while maintaining the data without risk. A storage replication method **300** comprises replicating **302** data from a source among a plurality of destinations and tracking **304** data modifications in the plurality of destinations. Identification of the modifications is mutually communicated **306** among multiple destination arrays. In a source failover event **308,** a selected destination is established **310** as a new source, reforming **312** the replicated data in the remaining destinations into synchrony with the new source. Typically, the selected destination can be established **310** as the new source by an action such as a user pressing a button on a graphical user interface (GUI) or typing a command in a command line interface (CLI) to activate the failover.

Mutual communication **306** of modification data among the destinations prior to failover **310** enables a significant decrease in the amount of time a user application is exposed to a condition in which only a single current copy of data exists after a failure involving a hub array. Communication **306** of the modification data also improves throughput performance to the source lun after failover since a full data copy is avoided.

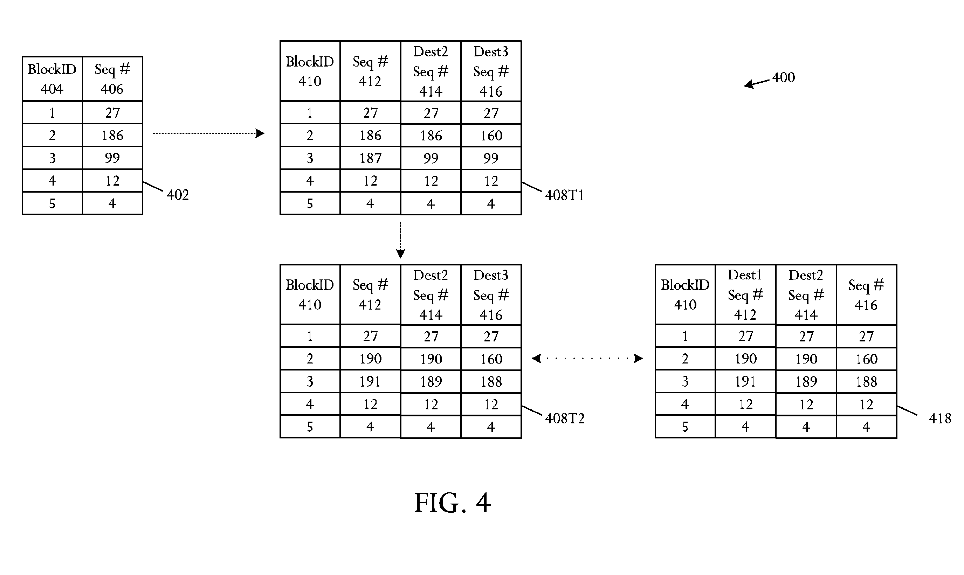

Referring to **FIGURE 4,** a schematic diagram depicts a sequence of block maps **400** showing an example of data tracking in a storage system. At a starting time for a fan-out operation, when one or more destinations are added to the fan-out, a full copy of data is sent over a communication link to the destination to synchronize data in corresponding logical units (luns) in the source and destination. A complete block map **402** of block identifier (IDs) **404** and sequence numbers **406** is sent from the source array to the destination array at the starting time. A full copy is completed on the communication pathway from the source to the destination so that the destination has a complete map of block numbers and sequence numbers for the lun corresponding to the source lun. All blocks for the lun are represented in the two-column value array **402.** The first column **404** is the block number. The second column **406** contains the sequence number associated with a respective block in the block column **404.** Every row has a distinct and unique sequence number. Duplicate sequence numbers are not allowed and cannot occur according to the illustrative data tracking technique executed on the source array. Thereafter, when the source array receives a write, an information triplet including BlockID, data, and sequence number is communicated to each destination. The entry in the block map on each destination is overlaid with the new sequence number when the write is committed.

For illustrative purposes, block map **402** shows a highly simplified example of a five-block lun which is formed in the source array and communicated to one or more new destination arrays. Each destination maintains a table associated with the block map table **402** stored in the source array.

In some embodiments, the tracking table on the source may be extended so that the source maintains a column for each destination as well for usage if the source is to subsequently rejoin the fanout as a destination. The columns are maintained with little or no additional overhead since the source receives an acknowledgement on writes to the destinations in any case. Tracking of all destination blocks at the source enables the source to rejoin the fanout without full copy subsequent to a failure event that does not affect the source lun. Accordingly, the illustrative technique enables reformation from a 1:n-1 fanout back to a 1:n fanout.

Typically, the source array may send writes to the destination arrays as individual writes in the write sequence. In some implementation or under some conditions, the source array may accumulate or bundle multiple writes and send the bundled writes as a unit. For communication of bundled writes, if the same block has more than one write within the bundle, only the last sequence number and associated data bits are sent to the destination lun for that block. Accordingly, bundling improves efficiency in the circumstance of a particular block that is repeatedly written, since data for that block is only transmitted over the link once per unit of time while the chunk is built. Transactional semantics may be used to ensure that the destination lun is always in a crash-consistent state. In the crash-consistent state the lun contains either the precise byte-for-byte value prior to application of the chunk or the precise byte-for-byte value after chunk application. If the destination lun enters a state in which only a partial chunk has been applied, the chunk is likely not crash-consistent because write operations have not been applied to the destination lun in the same order as the source lun. Although chunk data movement and crash-consistency have little or no material impact on the illustrative technique, transactional semantics may facilitate decision-making about which destination is chosen as the new hub for the fanout. Accordingly, a chunking approach may result in some blocks of data and corresponding sequence numbers never being sent to the destination array, and therefore such overlaid sequence numbers may never appear on any destination table. Such omitted sequence numbers are immaterial to operability of the illustrative technique.

In addition to updates from the source array to all of the destination arrays, the destination arrays also receive updates via the mutual interconnections among the destination arrays. Intercommunication between the destination arrays also supplies updates of block and sequence number combinations.

Block map **408T1** depicts a block map of a first destination array, Destination One, at a time T1. The block map **408T1** includes a BlockID **410** and a sequence number **412** proprietary to Destination One, similar to corresponding columns in the Block map **402** for the source array. In addition, the block map **408T1** also maintains sequence numbers for the other interconnected destination arrays, here Destination Two and Destination Three, in respective columns Dest2 Seq **414** and Dest3 Seq **416.** In the illustrative example, the sequence numbers for Destination Two differ from Destination One only for block three. The sequence numbers for Destination Three differ from Destination One for blocks two and three. The mismatches may result from various communication delays among the arrays or internal delays of arrays incurred due to write bundling, causing the accounting view for a destination to fall behind. In the case of synchronous replication only a few mismatches, at most, are expected. In asynchronous replication, mismatch incidence varies and in some cases can be large. The illustrative technique resolves mismatches at failover time regardless of which destination lun is ahead of another destination lun and regardless of how far behind or ahead any of the destination luns are from one another. The illustrative technique also reduces or minimizes data movement.

Each destination maintains and updates a similar block map table for the appropriate lun.

At the time **T2** of a failover incident, for example an event that eliminates the source site, at least temporarily. In the example, Destination One is chosen to be the new source array. Destination One sends to Destinations Two and Three a "reform" command and instruction indicating that Destination One is taking control as source array for the applicable lun. Both Destination Two and Destination Three stop accepting new write packets from the original source array and respond to the new source array, previous Destination One, with a final set of block numbers and sequence number pairs which the destination has committed. Destination One then updates the Block map, shown as map **408T2,** a fmal time.

Previous Destination One, as the new source array, scans the block map table **408T2** to enable detection of row entries that do not match. In the illustrative example, block 3 of Destination Two and blocks 2 and 3 of Destination Three do not match entries for the new source array. The new source array thus sends the internal copy of block 3, including all data bits, to Destination Two, and sends the internal copy of blocks 2 and 3 to Destination Three. Following completion of the copies from the new source to Destinations Two and Three, the corresponding luns for Destinations Two and Three contain the exact same block-by-block content as the previous Destination One. Operations return to a tracking state with a 1:2 fan configuration replacing the previous 1:3 configuration, and previous Destination One executing as the new source array. Following the data copies, all arrays are in synchrony. In the illustrative example, full data copies are made for only the non-matching blocks, eliminating full copies of the seven matching blocks. For the particular example, the technique has a copy burden of only 30% of a technique that does not use the illustrative data tracking. In a real world example with many more than five blocks per lun, the savings is significantly higher, typically having a copy burden of ten percent or less, compared to a full copy of all blocks, for most usage scenarios.

The example depicts a fail-over to a selected destination. In another embodiment of implementation, fail-over may be made to the destination of choice with the selected destination inheriting the most current copy of data when the fan is reformed. The technique involves the same scenario and actions previously depicted except that fail-over is made to the destination, here Destination Three, containing the most current copy. Block map table **418** shows status at the starting condition of the 1:2 fan-out configuration after a handshake to finalize the table. Block map table **418** is the view of block map table **408T2** from the perspective of Destination Three. Destination Three, as the new source array, scans the table and determines that the highest sequence number is contained in Destination One. Accordingly, Destination Three requests Destination One to transfer every block which differs. In the current example, Destination Three requests data bits for blocks 2 and 3. After the transfer, Destination Three has the most current data. Destination Three may follow the illustrative method to bring Destination Two equal to Destination Three by copying block 3 from Destination Three to Destination Two. As a result all destinations contain the most current data, and Destination Three is ready to begin operation as the new source.

The concept of "most current data" applies to destinations having active communication links at the time of failover. If a destination containing the actual most current data is not accessible due to link failure, an accessible destination having less current data, but more current data than any other accessible destination, is considered to have the "most current data".

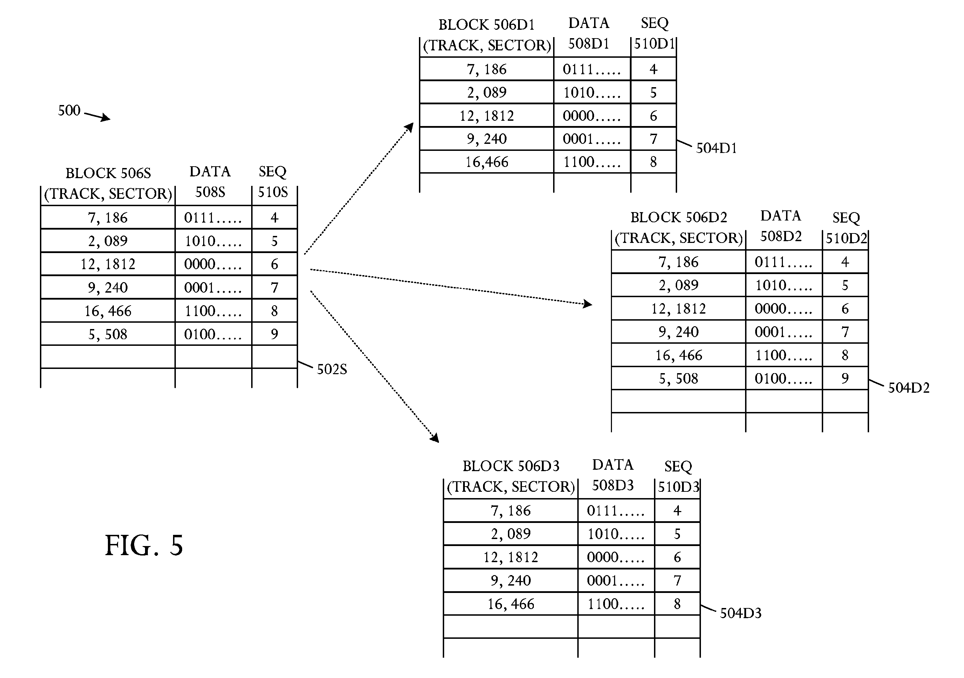

Referring to **FIGURE 5,** schematic table diagrams show another embodiment of data structures **500** suitable for usage to collect data during replication tracking. The illustrative block column, designating track and sector data, may be used in some embodiments as a different technique for describing the block identifier depicted in **FIGURE 4.** The data structures may be implemented as various files, tables, side files, and the like, containing a table of blocks which have been accessed, typically via write operations. A source data structure **502** is an object or application associated with a primary storage. For example a source hub maintains a table of writes and forwards changes to the table to other arrays or destinations. The source **502** receives writes from a host and distributes the writes, either sequentially or in a chunk, as depicted by data structure **502S,** to each destination. Destination data structures **504D1, 504D2,** and **504D3** are corresponding objects or applications associated respectively with three destination storages. Destination data structures **504D1, 504D2,** and **504D3** show data received by the individual destinations, which is not yet committed to storage. A destination receives a stream of writes, for example the writes shown in structure **502S,** and applies the writes in-order to the lun when received. If the chunk technique is used and block overlaying has occurred, source 502S captures the overwrites to the same block as a single row and the chunk of writes are applied as a single transaction to the destination. Otherwise, in a streamed or non-chunk implementation, if a write is made to a single row, blocks are not overlaid, and the same block can be represented multiple times in multiple rows, then the writes can be applied in order on each destination and the transaction size is a single row. Each destination receives the structure 502S information, either by streamed or chunk transmission. Each destination receives a list of changes in the table from the source and forwards the list of block and sequence numbers of changed data to all other destinations. The list of change information may be forwarded in real time or accumulated and forwarded after a selected accumulation. Once the destinations **504D1, 504D2,** and **504D3** have received the data in structure **502S** using either sequential or chunk transmission, as each block or chunk is committed to disk, the destinations send a set of block identification and sequence number combinations to the other destination arrays. The data combinations depict the block number and sequence number of the committed data. The data bytes in the committed blocks are not sent from one destination to another, thereby making the accounting technique efficient with minimal inter-destination bandwidth utilization.

The various data structures include a block field **506S, 506D1, 506D2,** and **506D3,** a data field **508S, 508D1, 508D2,** and **508D3,** and a sequence field **510S, 510D1, 510D2,** and **510D3** for each of the respective source and destination storages. The block field **506S, 506D1, 506D2,** and **506D3** designates one or more locations, such as a logical unit (lun) and track and sector information, on storage media to which writes are made. The data field **508S, 508D1, 508D2,** and **508D3** indicates buffered data corresponding to respective track and sector information in the corresponding block field. The sequence field **510S, 510D1, 510D2,** and **510D3** identifies sequence numbers defined by the source and associated with the respective data listed in the corresponding data field and track and sector information listed in the block field.

In some embodiments, data structures may include an acknowledge field designating an acknowledgement that a particular entry was related to other storage units. For example, a logical value of one in the acknowledge field may indicate receipt of a signal from other secondary storage units indicating a particular sequence number entry has been replicated to the other storage units. A logical value of zero may indicate absence of replication to a particular secondary storage unit.

In example operation, the source shows replicated sequence numbers from 4 to 9. A first destination replicates write operations corresponding to sequence numbers 4 to 8. A second destination replicates all of the source writes. A third destination replicates write operations corresponding to sequence numbers 4 to 8. Differences among the different storage units may result from temporary inoperability of a link or by differences in timing between links that may communicate via either synchronous or asynchronous communications. Asynchronous communication between links may result in differences in completion of many writes and thus many sequence numbers. Synchronous communication between links typically results in completion differences of one write, at most.

In the event of a failover condition, data is restored to the condition of a new source based on identification of sequence numbers in the tables. Data traffic is reduced in the illustrative technique by transmitting sequence numbers, rather than data, among the storage units for purposes of managing accounting of which resources have seen particular blocks.

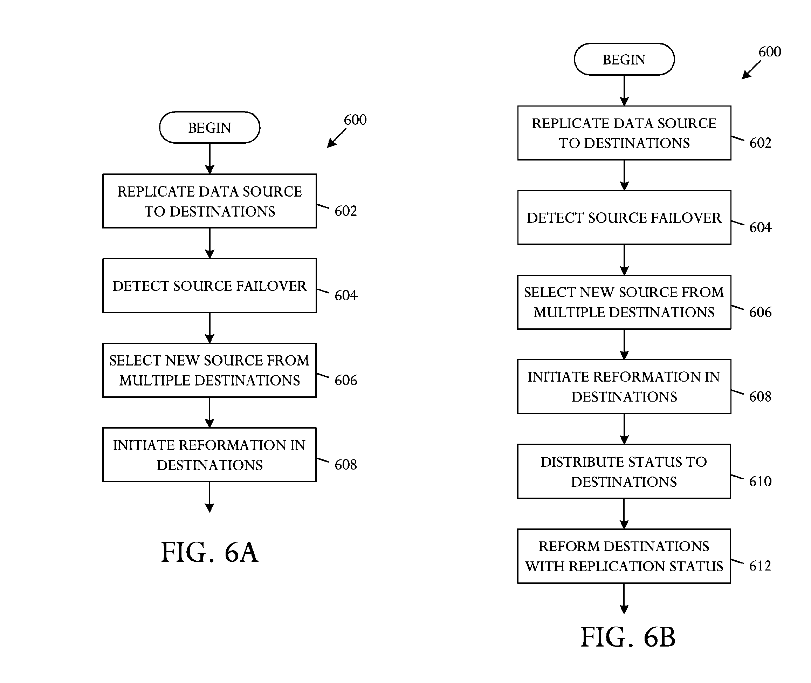

Referring to **FIGUREs 6A** and **6B,** flow charts depict embodiments of techniques for mending fanout to a reduced fanout ratio in the event of a source failure. A storage replication method **600** comprises replicating **602** data from a source to a plurality of destinations and detecting **604** a source failover condition. A new source is selected **606** from among multiple destinations based on conditions occurring contemporaneously with the failover condition. The new source sends **608** a signal initiating data reformation in the multiple destinations.

Selection of the replacement source based on information and conditions available at the time of failover enables efficient response based on factors such as location and cause of the failure, availability of resources to carry out a response, workload of portions of the storage system, and the like. Contemporaneous selection of the new source from among the plurality of destinations promotes flexible operation since, until the failover event occurs, a most appropriate response is unknown.

The method may further comprise, as shown in **FIGURE 6B,** distributing **610** replication status information for the individual destinations throughout the plurality of destinations during data replication. Data can be reformed **612** in the plurality of destinations into synchrony with the new source using the replication status information. Availability of the replication status information in the new source enables an improvement in performance since input and output operations directed to the new source hub lun is reduced or minimized during re-establishment of the replication. Similarly, availability of the replication status information in the individual destinations enables an improvement in performance since input and output operations directed to the destination luns are also reduced or minimized during re-establishment of the replication.

The improvement results because input and output operations in the source, and also in the destinations, do not have to contend with copying of large volumes of data as part of the reformation operation. Similarly, the performance impact to bandwidth on inter-site links is reduced or minimized during replication re-establishment. The technique enables limited intercommunication for reformation when a source fails, avoiding a fully copy that greatly consumes bandwidth and other resources. In all cases the performance improvement may potentially be of multiple orders of magnitude. Consequently, 1:n fanout technology using the illustrative techniques may become highly attractive to a high-availability, disaster-tolerant user who wants to keep host-side applications running without degraded performance.

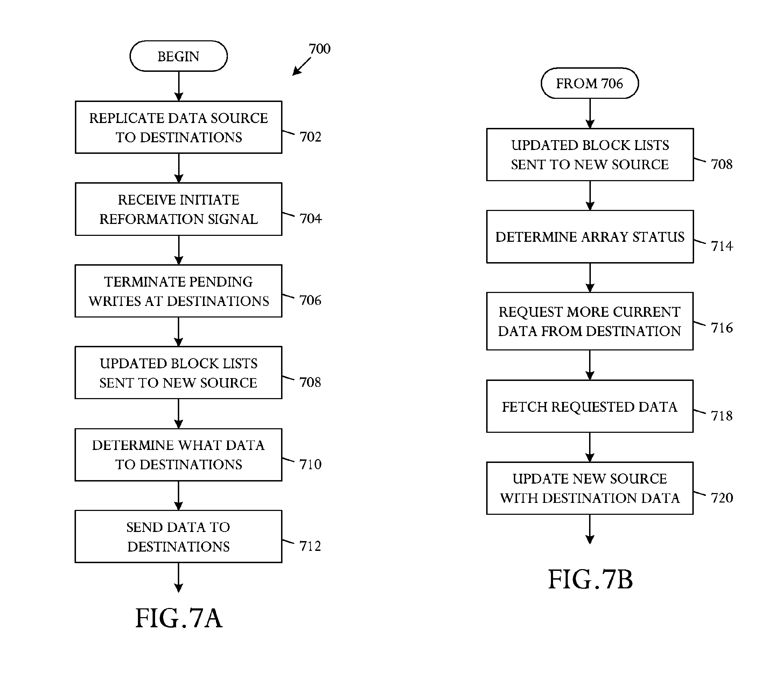

Referring to **FIGUREs 7A** and **7B,** flow charts depict embodiments of techniques for reforming a fanout configuration upon occurrence of a source failure. An illustrative source replication method **700** comprises replicating **702** data from a source to a plurality of destinations and receiving **704** at a destination a signal initiating data reformation. At the destinations, processing is terminated **706** for buffered writes pending from a previous replication write stream. The destinations send **708** an updated block list to the new source. The updated block list includes a list of blocks updated by the replication.

In some embodiments, the new source determines **710** data to be sent to the destinations based on the updated block lists. The source copies **712** data to the destinations that is sufficient to synchronize the new source and the destinations.

In a typical implementation, the new source or new hub sends a command identifying the new source indicating that the storage array is taking over as the new hub. The command also requests each destination to send a list of fmal sequence numbers identifying a list of outstanding block writes which have not previously been identified since prior intercommunication among the destinations has supplied a baseline set of sequence numbers. Accordingly, the intercommunication for reformation is reduced. The command also specifies that the destination cease accepting any new writes from the old source.

In **FIGURE 7B,** the fan-out configuration is reformed to the status of the most up-to-date destination upon occurrence of a source failure. Status of the arrays is determined **714.** A request is sent to the destination with the most current condition. After a reform command, the new source has sufficient information to determine which array is most current, defined as the array with the highest sequence number in the local block table. In many cases, multiple arrays may have identical states that are "most current" of the entire set of arrays, one of which may be selected to function as the most current. The new source also has information sufficient to determine which data blocks are to be gathered for reformation. The new source requests **716** and fetches **718** the data blocks sufficient to attain the most current condition, and updates **720** the new source with the requested data. Accordingly, the source controls updating of the arrays contained in the source.

Referring to **FIGUREs 8A** and **8B,** schematic block diagrams illustrate a storage system arrangement **800** that does not include tracking and sharing of tracked information. The illustrative arrangement **800** may be envisioned as a wheel with a hub **802S** at the center and communication spokes radiating from the hub **802S** to one or more destination arrays **802D.** The hub **802S** may be an array containing a source logical unit (lun) **810S.** The spokes are communication links **808** connecting the hub **802S** to the destination arrays **802D,** which contain remote luns **810D.** Data may flow either synchronously or asynchronously on each communication link **808.**

When a condition or situation occurs, as shown in **FIGURE 8A,** in which the hub array **802S** is lost, or communications to the hub **802S** are lost, the environment **800** is desired to fail over operations to one of the destination arrays **802D** to enable continuation of an application. In traditional fanout technology, no association exists between the destination arrays **802D.** Each destination array **802D** only has a relationship with the hub **802S**.

The fan-out relationship attempts to reform, as shown in **FIGURE 8B,** due to loss of the hub **802S.** The destination arrays **802D** contain no information about which blocks have or have not been written to the lun **810D** on the other destination arrays. As a result, the destination array which is determined to begin operation as a new hub **802S'** has to fully copy the lun **810S'**, which may be very large, to each of the other destination arrays **802D.**

The illustrative structures and techniques improve replication efficiency in comparison to techniques that involve full copying on reformation and also improve replication efficiency in comparison to techniques that do not require full copying.

The illustrative structure and techniques enable selection of an arbitrary destination to function as the new source.

While the present disclosure describes various embodiments, these embodiments are to be understood as illustrative and do not limit the claim scope. Many variations, modifications, additions and improvements of the described embodiments are possible. For example, those having ordinary skill in the art will readily implement the steps necessary to provide the structures and methods disclosed herein, and will understand that the process parameters, materials, and dimensions are given by way of example only. The parameters, materials, and dimensions can be varied to achieve the desired structure as well as modifications, which are within the scope of the claims. Variations and modifications of the embodiments disclosed herein may also be made while remaining within the scope of the following claims. For example, the disclosed apparatus and technique can be used in any storage configuration with any appropriate number of storage elements. The lun fanout is depicted as 1:3 fanout for illustrative purposes. Any suitable fanout ratio can be supported using the illustrative structures and techniques. Although, the storage system typically comprises magnetic disk storage elements, any appropriate type of storage technology may be implemented. The system can be implemented with various operating systems and database systems. The control elements may be implemented as software or firmware on general purpose computer systems, workstations, servers, and the like, but may be otherwise implemented on special-purpose devices and embedded systems.

## Claims

1. A storage unit **(202)** adapted for usage in a redundant data storage system **(200)** comprising:
a storage **(204);**
an input/output interface **(206)** coupled to the storage **(204)** and adapted to communicate with a plurality of distributed site storage units;
a controller **(208)** coupled to the storage **(204)** and the input/output interface **(206);** and
a logic executable on the controller **(208)** adapted to operate the storage unit **(202)** as a secondary site in a fanout arrangement, replicate data to the storage **(204)** from a primary site storage unit, track modifications in data written to storage **(204),** communicate the tracked modifications among the plurality of distributed site storage units, and collect tracked changes received from the plurality of distributed site storage units.

2. The storage unit **(202)** according to Claim 1 further comprising:
the logic adapted to receive a command to failover and, in response to the command to failover, operate the storage unit (**202**) as a primary site, send a request to reform fanout to the plurality of distributed site storage units, determine data to be sent to the plurality of distributed site storage units based on updated block lists from the plurality of distributed site storage units, and copy data to the plurality of distributed site storage units, the copied data being sufficient to replicate data in the primary site storage unit.

3. The storage unit **(202)** according to any of the above claims further comprising:
the storage **(204)** configured at least partly as logical units (luns);
the logic adapted to detect a write directed to a logical unit (lun) to which a fanout relationship exists with the primary site storage unit, track modified blocks in a storage logical unit (lun), and send an asynchronous communication packet to the plurality of distributed site storage units;
the logic adapted to collect a data packet including block numbers modified by one or more writes and sequence numbers indicating unique identifiers for block content and send the data packet by asynchronous communication to the plurality of distributed site storage units;
the logic adapted to combine a plurality of data packets into a packet group and send the data packet by asynchronous communication to the plurality of distributed site storage units; and
the logic adapted to receive a plurality of data packets and sequence numbers from the plurality of distributed site storage units and determine differences in data content among the plurality of distributed site storage units.

4. The storage unit **(202)** according to any of the above claims further comprising:
the logic adapted to receive a signal initiating data reformation, terminate processing of buffered writes pending from a previous replication write stream, and send to a storage unit newly operating as a primary site an updated block list, the updated block list including a list of blocks updated by the replication.

5. The storage unit **(202)** according to any of the above claims further comprising:
the logic adapted to receive a command to failover, reconfigure from operation as a secondary site storage unit to a new primary site storage unit, and send a signal informing remaining secondary site storage units of the plurality of distributed site storage units that fanout is reforming; and
the logic operable for a new primary site storage unit and adapted to:
determine whether a remaining secondary site storage unit of the plurality of distributed site storage units has a more current state than the new source;
send a request to the secondary site storage unit having the more current state for data that is not current in the new primary site storage unit; and
updating the new primary site storage unit with the requested data.

6. A storage system **(100)** comprising:
a plurality of storage arrays **(102)** arranged in a 1:n fanout configuration; and
a logic **(104)** executable in the plurality of storage arrays **(102)** adapted to track data modifications during data replication from a source storage array **(102S)** to n destination storage arrays **(102D1, 102D2, 102D3),** mutually share tracked data modification information among the n destination storage arrays (**102D1, 102D2, 102D3**), and respond to a failover condition by reforming to a 1:n-1 fanout configuration, the reformation being directed according to the mutually shared tracked data modification information from the n destination storage arrays **(102D1, 102D2, 102D3**).

7. The storage system **(100)** according to Claim 6 further comprising:
the logic **(104)** adapted to respond to the failover condition by configuring the plurality of storage arrays **(102)** to exclude the failed source storage array (**102S**) and assign one of the n destination storage arrays **(102D1, 102D2, 102D3)** to operate as a new source storage array **(102S)** in an assignment made substantially contemporaneously with the failover; and
the logic **(104)** adapted to further respond to the failover condition by reforming data in remaining n-1 destination storage arrays into compliance with the new source storage array.

8. The storage system **(100)** according to either one of claim 6 or 7 further comprising:
a logic (**104**) executable in individual destination storage arrays **(102D1, 102D2, 102D3)** adapted to detect a write directed to a logical unit (lun) to which a fanout relationship exists with the source storage array **(102S)** and adapted to send an asynchronous communication packet to others of the destination storage array plurality.

9. The storage system **(100)** according to any of claims 6 to 8 further comprising:
a logic (**104**) executable in individual destination storage arrays (**102D1, 102D2, 102D3)** adapted to:
detect a write directed to a logical unit (lun) to which a fanout relationship exists with the source storage array **(102S);**
collect a data packet including block numbers modified by one or more writes and sequence numbers indicating unique identifiers for block content; and
send the data packet by asynchronous communication to others of the destination storage array plurality;
a logic **(104)** executable in individual destination storage arrays **(102D1, 102D2, 102D3)** further adapted to combine a plurality of data packets into a packet group and send the packet group by asynchronous communication to others of the destination storage array plurality; and
a logic (**104**) executable in individual destination storage arrays **(102D1, 102D2, 102D3)** further adapted to receive a plurality of data packets and sequence numbers from others of the destination storage array plurality and determine differences in data content among the destination storage array plurality.

10. The storage system **(100)** according to any of claims 6 to 9 further comprising:
a logic (**104**) executable in individual destination storage arrays **(102D1, 102D2, 102D3)** further adapted to:
receive a command to failover;
reconfigure as a new source storage array; and
send a signal informing remaining destination storage arrays in the destination storage array plurality that fanout is reforming;
a logic (**104**) executable in individual destination storage arrays (**102D1, 102D2, 102D3)** adapted to:
receive the signal informing of fanout reforming;
terminate processing of buffered writes pending from a previous replication write stream; and
send to the new source storage array an updated block list in the destination, the updated block list including a list of blocks updated by the replication;
a logic **(104)** executable in the new source storage array adapted to:
determine differences in updated block lists received from the destination storage array plurality; and
copy data to the destination storage array plurality sufficient to synchronize the storage array plurality; and
a logic **(104)** executable in the new source storage array adapted to:
determine whether a destination storage array of the destination storage array plurality has a more current state than the new source storage array;
send to a destination storage array having a most current state a request for data that is present in the destination storage array and not present in the new source storage array; and
updating the new source storage array with data received in response to the
